# EUROPÄISCHE PATENTSCHRIFT

(11) **EP 0 848 643 B1**
(45) Veröffentlichungstag und Bekanntmachung des Hinweises auf die Patenterteilung: **06.11.2002**
(21) Anmeldenummer: 96919568.4
(22) Anmeldetag: 23.05.1996
(51) Int. Cl.: B01D 69/08, B01D 67/00, D01D 5/24

(54) **VERFAHREN ZUR HERSTELLUNG VON POLYMER-HOHLFADENMEMBRANEN**
METHOD OF PRODUCING HOLLOW FIBRE POLYMER MEMBRANES
PROCEDE DE PRODUCTION DE MEMBRANES POLYMERES A FIBRES CREUSES

(30) Priorität: 01.06.1995 DE 19520188
(43) Veröffentlichungstag der Anmeldung: 24.06.1998
(73) Patentinhaber: GKSS-FORSCHUNGSZENTRUM GEESTHACHT GMBH, 21502 Geesthacht (DE)
(72) Erfinder: KLÖTZER, Rebecca, D-20144 Hamburg (DE); SEIBIG, Bernd, D-21502 Geesthacht (DE); PAUL, Dieter, D-14532 Kleinmachnow (DE); PEINEMANN, Klaus-Viktor, D-21502 Geesthacht (DE); SENGBUSCH, Günter, D-21357 Barum/St. Dionys (DE)
(74) Vertreter: Niedmers, Ole, Dipl.-Phys.
(86) Internationale Anmeldenummer: DE9600897
(87) Internationale Veröffentlichungsnummer: WO96038221

(56) Entgegenhaltungen:
- DE-A- 2 833 493
- DE-A- 19 850 340
- GB-A- 927 582
- US-A- 1 487 807
- US-A- 3 095 258
- PATENT ABSTRACTS OF JAPAN vol. 013, no. 187 (C-592), 2.Mai 1989 & JP,A,01 014315 (MITSUBISHI RAYON CO LTD), 18.Januar 1989, in der Anmeldung erwähnt & DATABASE WPI Week 8909 Derwent Publications Ltd., London, GB; AN 89-063911
- QUAN HUANG: 'Polycabonate hollow fiber membranes by melt extrusion' JOURNAL OF MEMBRANE SCIENCE Bd. 161, 1999, AMSTERDAM, NL, Seiten 287 - 291

## Beschreibung

Die Erfindung betrifft ein Verfahren zur Herstellung von Polymer-Hohlfadenmembranen, bei dem ein geschmolzenes Polymer zur Bildung der Hohlfadenmembranen durch eine Extrusionseinrichtung geführt wird.

Hohlfadenmembranen dieser Art werden zur Trennung von Stoffgemischen nach dem sogenannten Siebmechanismus genutzt. Art und Größe der in diesen Membranen ausgebildeten Poren, insbesondere derjenigen an der Membranoberfläche, entscheiden über die Trenneigenschaften der Membranen. Aufgrund der großen Porosität wird bei Hohlfadenmembranen eine hohe Permeabilität pro Volumeneinheit erreicht.

Bei einem bekannten Verfahren dieser Art (US-PS 3 745 202) wird eine Mischung aus Polymeren und Weichmachern aus der Schmelze extrudiert, wobei der sich nachfolgend bildende Hohlfaden im geschmolzenen Zustand verstreckt und entweder an Luft, im Wasserbad oder in einer wässrigen Lösung eines Weichmachers verfestigt wird. Dabei bildet sich ein poröser Hohlfaden. Der nicht flüchtige Weichmacher muß anschließend herausgewaschen werden, wobei die eigentliche Membranbildung dann durch eine Nachbehandlung mit heißem Wasser und anschließend mit einer wässrigen Lösung aus Dioxan, Ameisensäure oder einer Substanz erfolgt, die Lösungsmitteleigenschaften gegenüber den Polymeren besitzt. Die in der Membran schließlich verbleibenden Zusatzstoffe müssen am Ende des Prozesses auf aufwendige Weise entfernt werden.

Darüber hinaus sind eine Vielzahl anderer Verfahren bekannt, bei denen ähnlich wie in dem vorangehend beschriebenen bekannten Verfahren Hohlfadenmembranen durch Extrusion von Polymeren aus der Schmelze hergestellt werden. In der US-PS 3 873 653 wird die Herstellung von Hohlfadenmembranen aus Celluloseacetat beschrieben, wobei dichte Hohlfäden aus der Schmelze extrudiert werden und anschließend durch nachträgliche chemische Behandlung mit Formamid die eigentliche Membran gebildet wird. In der DE-PS 28 33 493 wird ein Verfahren beschrieben, bei dem eine binäre Mischung von Poly(propylen) und einem monomeren Amin oberhalb der Entmischungstemperatur extrudiert wird und durch anschließende Fällung in ein Bad aus dem selben Amin unterhalb der Entmischungstemperatur die eigentliche Membranbildung erfolgt. Anschließend muß das Fällungsmittel aus der Membran entfernt werden. Diese bekannten Verfahren zeichnen sich dadurch nachteilig aus, daß die gebildeten Hohlfäden in mehr oder weniger aufwendigen physikalischen und/oder chemischen Nachbehandlungsschritten nach dem eigentlichen Extrusionsvorgang behandelt werden müssen, um die gewünschten Membraneigenschaften zu erhalten, und zusätzlich vielfach von Bestandteilen wie Lösungsmitteln, Weichmachern und dergleichen auf aufwendige Weise befreit werden müssen, da diese zusätzlichen Mittel, würden sie in der Hohlfadenmembran verbleiben, die Hohlfadenmembran für die allermeisten Anwendungsgebiete ungeeignet machen würden.

Es kann also davon ausgegangen werden, daß die bekannten Verfahren einschließlich des eingangs genannten bekannten Verfahrens entweder zur Herstellung der Hohlfadenmembranen Lösungsmittel benötigen, die in nachfolgenden Prozeßschritten aus der Membran entfernt werden müssen und nachteiligerweise zudem in geringen Mengen in der entstandenen Membran zurückbleiben, oder daß chemische Substanzen als Zusatzstoffe bei der Ausführung des Verfahrens benutzt werden, beispielsweise Weichmacher, Porenbildner, Ätzchemikalien usw., die ebenfalls entweder aus der entstandenen Membran mit aufwendigen Verfahrensschritten z.B. durch Extraktion, Filtern und Waschen entfernt werden müssen oder aber in der Membran als Reststoffe zurückbleiben.

Darüber hinaus sind Verfahren bekannt, bei denen durch Extrusion aus der Schmelze reiner Polymere ohne weitere zusätzliche Komponenten Hohlfadenmembranen hergestellt werden. Ein bekanntes Verfahren dieser Art wird in der JP-PS 01 014 315 beschrieben. Dabei wird ein thermoplastisches Polymer aus der Schmelze extrudiert und auf eine Temperatur unterhalb der Schmelztemperatur für mindestens 1 min getempert, um einen Kristallisationsgrad von 25-50% zu erreichen. Anschließend werden nacheinander Kaltverstreckung unterhalb der Schmelztemperatur und Schulter-Hals-Verstreckung oberhalb der Schmelztemperatur in mehreren Verfahrensschritten durchgeführt und eine Porenbildug erreicht. Es sind weitere ähnliche Verfahren bekannt, bei denen durch eine thermisch-mechanische Nachbehandlung eine Porenbildung in schmelzextrudierten, dichten Hohlfäden erreicht wird, so werden in der JP-PS 01 099 610 und der JP-PS 01 027 607 die Herstellung von Hohlfadenmembranen aus Poly-(ethylen-co-chlortrifluorenthylen) und in der US-PS 5 232 642 die Herstellung von Hohlfadenmembranen aus Poly-(propylen) beschrieben. Die vorangehend genannten Verfahren unterscheiden sich dabei in den verschiedenen thermischen und mechanischen, auf das Polymer abgestimmten Verfahrensschritten. Die Dauer der Wärmebehandlung zur gezielten Kristallisaton der Polymere variiert dabei zwischen 1 min und 30 min.

Die bisher bekannten Verfahren einschließlich der beschriebenen bekannten Verfahren zur Herstellung von Hohlfadenmembranen durch Extrusion aus einer reinen Polymerschmelze nach Extrusion aus der Schmelze und anschließender thermischer und mechanischer Nachbehandlung haben den Nachteil, daß sie sich nur für teilkristalline bzw. kristallisierbare Polymere anwenden lassen und daß ein Erreichen hoher Spinngeschwindigkeiten durch die Dauer der Wärmebehandlung behindert wird.

Aus der US-A-3 095 258 ist ein Verfahren zur Herstellung von ggf. geschäumten Hohlfäden bekannt. Die Hohlfäden sind nicht porös. Die Innen- und Außenwände der Hohlfäden weisen eine feste Polymerlage bzw. einen festen Polymermantel auf.

Es ist daher Aufgabe der vorliegenden Erfindung, ein Verfahren der eingangs genannten Art zu schaffen, mit dem sehr hohe Spinngeschwindigkeiten von mehr als 2.000 mm/min erzielt werden können und dabei keine Zusatz- und Hilfsstoffe verwendet werden müssen, d.h. eine zeit- und kostenintensive Entfernung dieser Stoffe aus der gebildeten Hohlfadenmembran nicht nötig ist, wobei das Verfahren einfach, kostengünstig und kontinuierlich ausführbar sein soll.

Gelöst wird die Aufgabe gemäß der Erfindung dadurch, daß das Polymer unter Druck vor Eintritt in ein die Schmelze formendes Extrusionswerkzeug der Extrusionseinrichtung mit Gas beladen wird, wobei sich infolge eines beim Austritt des Polymers aus der Extrusionseinrichtung in vorbestimmbarem Maße erfolgenden Druckabfalls und der damit einhergehenden Expansion des Gases im Polymer eine poröse Hohlfadenmembran bildet.

Der Vorteil des erfindungsgemäßen Verfahrens liegt im wesentlichen darin, daß sich die mikrozellulären Hohlräume (Poren) in der Hohlfadenmembran auf sehr einfache und elegante Weise auf fortwährend reproduzierbare Weise vollständig selbständig ausbilden und zwar in dem Augenblick, wo die Hohlfadenmembran die Extrusionseinrichtung verläßt. Das Verfahren hat zudem den Vorteil, daß es absolut ohne chemisch reagierende Fremdstoffe ausgeführt werden kann, d.h. ein Nachbehandeln zur Entfernung der an sich für die fertige Hohlfadenmembran schädlichen Zusatzstoffe ist nicht erforderlich, wobei in der erfindungsgemäß hergestellten Membran auch keine noch so geringen Restbestandteile an Zusatzstoffen, wie man es von bisher bekannten Verfahren dieser Art kannte, verbleiben. Dabei sind vorteilhafterweise an das Gas zur Beladung des Polymers keine besonderen Forderungen gestellt, d.h. dieses kann beispielsweise einfacher Stickstoff, Kohlendioxyd oder ein beliebiges anderes nicht reaktionsfähiges bzw. Gasgemisch sein. Die Expansion des Gases nach dem Austritt des Polymers bzw. der so gebildeten Hohlfadenmembran aus der Extrusionseinrichtung führt faktisch zu einem Aufschäumen des geschmolzenen Po lymers und somit zur Ausbildung der Poren in der Membranwand.

Vorzugsweise wird das gasbeladene Polymer vor Eintritt in die Extrusionseinrichtung auf eine Temperatur oberhalb der Erweichungstemperatur erwärmt, wobei vorteilhafterweise bei amorphen Polymeren die Temperatur oberhalb von deren Glasübergangstemperatur liegt, wohingegen vorteilhafterweise die Temperatur bei kristallinen Polymeren oberhalb von deren Schmelztemperatur liegt. Es ist also erfindungsgemäß vorteilhafterweise möglich, sowohl amorphe als auch teilkristalline Polymere mittels des erfindungsgemäßen Verfahrens zur Ausbildung von Hohlfadenmembranen zu verbinden, wobei das Verfahren an die unterschiedlich zu verwendenden Polymere durch Einstellung der Extrusionstemperatur des Polymers durch Anpassung an die unterschiedlichen Erweichungstemperaturen unterschiedlicher Polymere angepaßt werden kann.

Zudem ist das Verfahren vorteilhafterweise auch nicht nur auf Polymere, sondern auch auf Polymergemische anwendbar, d.h. das erfindungsgemäße Verfahren ist nicht auf bestimmte Polymere beschränkt, vielmehr können alle thermoplastischen Polymere bei der Ausführung des erfindungsgemäßen Verfahrens Verwendung finden in Abhängigkeit der gewünschten Membranparameter im Hinblick auf die Art der gewünschten Anwendung bzw. des Einsatzes der Membran.

Die Art der Beladung des Polymers mit dem Gas vor Eintritt in das die Schmelze formende Extrusionswerkzeug der Extrusionseinrichtung kann grundsätzlich auf verschiedene Weise erfolgen. So ist es beispielsweise vorteilhafterweise möglich, die Beladung des Polymers mit dem Gas in einem der Extrusionseinrichtung vorgeschalteten Autoklaven erfolgen zu lassen, es ist aber auch vorteilhafterweise möglich, die Beladung des Polymers mit einem Gas erst unmittelbar in der Extrusionseinrichtung selbst erfolgen zu lassen. Die unterschiedlichen Möglichkeiten der Beladung des Polymers mit dem Gas wird in Abhängigkeit der gewünschten Eigenschaften der Polymermembran und/oder in Abhängigkeit der zur Verfügung stehenden Apparatur zur Ausführung des Verfahrens gewählt werden können.

Wie schon erwähnt, ist beim erfindungsgemäßen Verfahren eine chemische Nachbehandlung der die Extrusionseinrichtung verlassenden Hohlfadenmembran nicht nötig, da die Hohlfadenmembranen ohne Rückstände von Zusatzmitteln erzeugt werden. Gleichwohl kann es vorteilhaft sein, die die Extrusionseinrichtung verlassende Hohlfadenmembran zur Modifikation ihrer physikalischen Dimensionen zu verstrecken, d.h. die gewünschten Dimensionen der Hohlfadenmembran einzustellen. Dieses kann auf an sich bekannte Weise erfolgen.

Um aber auch die Trenneigenschaften der Hohlfadenmembran nach ihren Herstellungsvorgang durch die Extrusionseinrichtung noch beeinflussen zu können, ist es vorteilhaft, die Hohlfadenmembran während des Verstreckungsvorganges mit Wärme zu behandeln, d.h. der Hohlfadenmembran Wärme zuzufügen bzw. von dieser Wärme abzuführen, wobei die Abkühlung zudem zu einer Stabilisierung der Hohlfadenmembran führt.

Zudem ist es bei einer weiteren vorteilhaften Ausgestaltung des Verfahrens sinnvoll, daß der beim Extrusionsvorgang in der Hohlfadenmembran sich zielgemäß bildende Innenraum mit einem zweiten Gas zur Modifikation der inneren Wandschicht beaufschlagt wird, d.h. es ist damit eine Einstellung der Trenneigenschaft der Membran insbesondere im Bereich der inneren Wandschicht der Membran gezielt möglich.

Um eine vorteilhafte Beeinflussung der Hohlfadenmembran nach dem Austritt aus der Extrusionseinrichtung im Zuge der Behandlung des Innenraums der Hohlfadenmembran mit dem zweiten Gas zu erreichen, ist es vorteilhaft, daß sich die Zusammensetzung und/oder der Druck des das Polymer beladenden Gases und des die Hohlfadenmembran innen beaufschlagenden zweiten Gases unterscheidet.

Wie oben erwähnt, ist das erfindungsgemäße Verfahren sowohl zur Verwendung von thermoplastischen Polymeren als auch thermoplastischen Polymergemischen geeignet. Demzufolge kann auch vorzugsweise der Extrusionsvorgang des Polymers beim erfindungsgemäßen Verfahren derart gewählt werden, daß gleichzeitig eine Mehrzahl unterschiedlicher Polymere und/oder Polymergemische zur Bildung eines vorbestimmbaren Porositätsgradienten über den Querschnitt der Hohlfadenmembran extrudierbar sind.

Mit dem erfindungsgemäßen Verfahren sind vorteilhafterweise Hohlfadenmembranen herstellbar mit Eigenschaften, die die Verwendung im human- und tiermedizinischen sowie im bio- und umwelttechnischen Bereich erlauben, d.h. in Bereichen, wo auch geringste Restmengen von Zusatzmitteln im Membrankörper nachteilig und nicht akzeptabel sind, d.h. es sind Hohlfadenmembranen bereitstellbar, die sich durch eine sehr hohe Biokompatibilität auszeichnen, so daß sie zur Anwendung insbesondere auch im medizinischen Bereich sehr gut geeignet sind.

Die Erfindung wird nun anhand eines Ausführungsbeispieles im einzelnen beschrieben.

Ein thermoplastisches Polymer oder ein thermoplastisches Polymergemisch wird unter hohem Druck in einem Autoklaven mit einem Gas, beispielsweise Stickstoff oder Kohlendioxyd, einem Gasgemisch oder einem beliebigen anderen geeigneten Gas beladen. Das gasbeladene Polymer wird in einer Extrusionseinrichtung auf eine Temperatur oberhalb der Erweichungstemperatur, d.h. für amorphe Polymere oberhalb der Glasübergangstemperatur und für teilkristalline Polymere oberhalb der Schmelztemperatur, erwärmt. Dieses gasbeladene Polymer wird dann mittels einer Extrusionsdüse bzw. eines Extrusionswerkzeugs in geeigneter Form zu einem Hohlfaden geformt. Unmittelbar im Zuge des Austretens des Hohlfadens aus der Extrusionseinrichtung erfolgt durch einen außen voreingestellten niedrigen Druck und des sich daraus ergebenden Druckabfalls bei Austritt aus der Extrusionsdüse eine Expansion des übersättigt im Polymer gelösten Gases. Dieses führt zu einem Aufschäumen des geschmolzenen Polymers und somit zur angestrebten Ausbildung von Poren in der Wand der sich somit bildenden Hohlfadenmembran. Die Stabilisierung der Hohlfadenmembran erfolgt durch die Erhöhung der Viskosität bei der Desorption des gelösten Gases und durch das Abkühlen. Die Größe und die Form der Poren werden durch die Extrusionsparameter wie dem Druck, der Temperatur, der Schneckenform und Geschwindigkeit sowie der Düsenform der Extrusionseinheit gesteuert bzw. eingestellt.

Nachfolgend kann die Hohlfadenmembran mittels eines weiteren Verstreckungsschrittes zur Anpassung an die gewünschte Dimension der Hohlfadenmembran behandelt werden. Dabei kann auch ein als Stützgas fungierendes zweites Gas eingesetzt werden, das in den sich beim Extrusionsvorgang in der Hohlfadenmembran bestimmungsgemäß bildenden Innenraum eingegeben wird, wobei dieses zweite Gas zur gezielten Modifikation der inneren Wandschicht eingesetzt wird. Um dabei eine vorteilhafte Beeinflussung der sich gebildet habenden Hohlfadenmembran zu erreichen, wird die Zusammensetzung dieses den Hohlfadeninnenraum beaufschlagten zweiten Gases so gewählt, daß es eine andere Zusammensetzung und/oder einen anderen Druck als das Gas aufweist, welches das das Polymer sättigende Gas bildet. Grundsätzlich ist es auch möglich, daß in einem einzigen Verfahrensschritt verschiedene Polymere oder Polymergemische zusammen extrudiert werden, so daß auch auf diese Weise gezielt Porositätseigenschaften der hergestellten Hohlfadenmembran und auch gezielt ein Porositätsgradient über den Hohlfadenquerschnitt eingestellt werden bzw. wird.

Das voraufgeführte Verfahren gestattet die kontinuierliche Ausbildung bzw. Herstellung poröser Hohlfadenmembranen mit einer hohen Verfahrensgeschwindigkeit mit mehr als 2.000 m/min, wobei das Verfahren grundsätzlich für alle amorphen und auch teilkristalline Polymere, die sich zur Ausbildung von Membranen eignen, Verwendung finden kann. Zudem gestattet das Verfahren unter Verwendung dieser Polymeren auch die Ausbildung einer asymmetrischen Porositätsverteilung über den Membranquerschnitt unter Beibehaltung der hohen Herstellungsgeschwindigkeit der Hohlfadenmembranen. Eine Nachbehandlung ist, außer dem gegebenenfalls auszuführenden Verstrecken zur Einstellung der Dimension der Hohlfadenmembran, nicht erforderlich, da das Verbleiben von Rückständen aus Zusatzmitteln oder dergleichen in der mit dem erfindungsgemäßen Verfahren gebildeten Hohlfadenmembran nicht zu befürchten ist.

## Patentansprüche

1. Verfahren zur Herstellung von Polymer-Hohlfadenmembranen, bei dem ein geschmolzenes Polymer zur Bildung der Hohlfadenmembranen durch eine Extrusionseinrichtung geführt wird, **dadurch gekennzeichnet, daß** das Polymer unter Druck vor Eintritt in ein die Schmelze formendes Extrusionswerkzeug der Extrusionseinrichtung mit Gas beladen wird, wobei sich infolge eines beim Austritt des Polymers aus der Extrusionseinrichtung in vorbestimmbarem Maße erfolgenden Druckabfalls und der damit einhergehenden Expansion des Gases im Polymer eine poröse Hohlfadenmembran bildet.

2. Verfahren nach Anspruch 1, **dadurch gekennzeichnet, daß** das gasbeladene Polymer in der Extrusionseinrichtung auf eine Temperatur oberhalb der Erweichungstemperatur erwärmt wird.

3. Verfahren nach Anspruch 2, **dadurch gekennzeichnet, daß** die Temperatur bei amorphen Polymeren oberhalb von deren Glasübergangstemperatur liegt.

4. Verfahren nach Anspruch 2, **dadurch gekennzeichnet, daß** die Temperatur bei kristallinen Polymeren oberhalb von deren Schmelztemperatur liegt.

5. Verfahren nach einem oder mehreren der Ansprüche 1 bis 4, **dadurch gekennzeichnet, daß** das Polymer ein Polymergemisch ist.

6. Verfahren nach einem oder mehreren der Ansprüche 1 bis 5, **dadurch gekennzeichnet, daß** die Beladung des Polymers mit einem Gas in einem der Extrusionseinrichtung vorgeschalteten Autoklaven erfolgt.

7. Verfahren nach einem oder mehreren der Ansprüche 1 bis 6, **dadurch gekennzeichnet, daß** die Beladung des Polymers mit einem Gas in der Extrusionseinrichtung erfolgt.

8. Verfahren nach einem oder mehreren der Ansprüche 1 bis 7, **dadurch gekennzeichnet, daß** die die Extrusionseinrichtung verlassende Hohlfadenmembran zur Modifikation ihrer Dimension verstreckt wird.

9. Verfahren nach Anspruch 8, **dadurch gekennzeichnet, daß** die Hohlfadenmembran während des Verstreckvorganges wärmebehandelt wird.

10. Verfahren nach einem oder mehreren der Ansprüche 1 bis 9, **dadurch gekennzeichnet, daß** sich der beim Extrusionsvorgang in der Hohlfadenmembran bildende Innenraum mit einem zweiten Gas und/oder Gasgemisch zur Modifikation der inneren Wandschicht beaufschlagt wird.

11. Verfahren nach Anspruch 10, **dadurch gekennzeichnet, daß** sich die Zusammensetzung und/oder der Druck des das Polymer beladenen Gases und/oder Gasgemisches und des die Hohlfadenmembran innen beaufschlagenden zweiten Gases und/oder Gasgemisches unterscheidet.

12. Verfahren nach einem oder mehreren der Ansprüche 5 bis 11, **dadurch gekennzeichnet, daß** der Extrusionsvorgang des Polymers derart gewählt wird, daß gleichzeitig eine Mehrzahl unterschiedlicher Polymere und/oder Polymergemische zur Bildung eines vorbestimmbaren Porositätsgradienten über den Querschnitt der Hohlfadenmembran extrudierbar sind.

13. Verwendung der gemäß dem Verfahren nach einem oder mehreren der Ansprüche 1 bis 12 herstellbaren Hohlfadenmembranen im human- und tiermedizinischen, bio-, prozess- und umwelttechnischen Bereich.

14. Verwendung der gemäß dem Verfahren nach einem oder mehreren der Ansprüche 1 bis 12 herstellbaren Hohlfadenmembranen für die Dialyse, die Ultrafiltration, die Mikrofiltration sowie die Dämpfepermeation.

## Claims

1. A method of manufacturing polymer hollow fibre membranes, in which a molten polymer is guided through an extrusion device for the purpose of forming the hollow fibre membranes, **characterized in that** the polymer is charged with gas under pressure before entering a melt-producing extrusion tool of the extrusion device, a porous hollow fibre membrane being formed as a result of a drop in pressure, which occurs to a predeterminable extent when the polymer exits the extrusion device, and the accompanying expansion of the gas in the polymer.

2. A method according to Claim 1, **characterized in that** the gas-charged polymer in the extrusion device is heated to a temperature which is higher than the softening temperature.

3. A method according to Claim 2, **characterized in that** the temperature in the case of amorphous polymers is higher than their glass transition temperature.

4. A method according to Claim 2, **characterized in that** the temperature in the case of crystalline polymers is higher that their melting temperature.

5. A method according to one or more of Claims 1 to 4, **characterized in that** the polymer is a polymer mixture.

6. A method according to one or more of Claims 1 to 5, **characterized in that** the polymer is charged with a gas in an autoclave upstream of the extrusion device.

7. A method according to one or more of Claims 1 to 6, **characterized in that** the polymer is charged with a gas in the extrusion device.

8. A method according to one or more of Claims 1 to 7, **characterized in that** the hollow fibre membrane leaving the extrusion device is stretched for the purpose of modifying its dimensions.

9. A method according to Claim 8, **characterized in that** the hollow fibre membrane is heat-treated during the stretching procedure.

10. A method according to one or more of Claims 1 to 9, **characterized in that** the interior space formed in the hollow fibre membrane during the extrusion procedure is acted upon by a second gas and/or gas mixture for the purpose of modifying the inner wall layer.

11. A method according to Claim 10, **characterized in that** the composition and/or the pressure of the gas or gas mixture with which the polymer is charged, and the second gas and/or gas mixture which acts on the inside of the hollow fibre membrane, varies.

12. A method according to one or more of Claims 5 to 11, **characterized in that** the extrusion procedure of the polymer is selected such that a plurality of different polymers and/or polymer mixtures can be extruded at the same time for the purpose of forming a predeterminable porosity gradient over the cross-section of the hollow fibre membrane.

13. A use of the hollow fibre membranes which can be manufactured according to the method according to one or more of Claims 1 to 12 within the areas of human and animal medicine, biotechnology, process technology and environmental technology.

14. A use of the hollow fibre membranes which can be manufactured according to the method according to one or more of Claims 1 to 12 for dialysis, ultrafiltration, microfiltration and steam permeation.

## Revendications

1. Procédé de production de membranes polymères à fibres creuses, pour lequel, pour la formation des membranes à fibres creuses, un polymère fondu est envoyé à travers un dispositif d'extrusion, **caractérisé en ce que** le polymère sous pression est chargé en gaz avant l'entrée dans un outil d'extrusion du dispositif d'extrusion, qui façonne la masse fondue, moyennant quoi il se forme une membrane poreuse à fibres creuses par suite de la chute de pression qui s'effectue de façon prévisible lors de la sortie du polymère du dispositif d'extrusion et de l'expansion du gaz qui s'ensuit dans le polymère.

2. Procédé selon la revendication 1, **caractérisé en ce que** le polymère chargé de gaz est réchauffé dans le dispositif d'extrusion à une température supérieure à sa température de ramollissement.

3. Procédé selon la revendication 2, **caractérisé en ce que** la température est située pour des polymères amorphes au-dessus de la température de transition vitreuse.

4. Procédé selon la revendication 2, **caractérisé en ce que** la température est située pour des polymères cristallins au-dessus de la température de fusion.

5. Procédé selon une ou plusieurs des revendications 1 à 4, **caractérisé en ce que** le polymère est un mélange de polymères.

6. Procédé selon une ou plusieurs des revendications 1 à 5, **caractérisé en ce que** la charge du polymère avec un gaz s'effectue dans une autoclave en amont du dispositif d'extrusion.

7. Procédé selon une ou plusieurs des revendications 1 à 6, **caractérisé en ce que** la charge du polymère avec un gaz s'effectue dans le dispositif d'extrusion.

8. Procédé selon une ou plusieurs des revendications 1 à 7, **caractérisé en ce que** la membrane à fibres creuses qui quitte le dispositif d'extrusion est étirée en vue de la modification de ses dimensions.

9. Procédé selon la revendication 8, **caractérisé en ce que** la membrane à fibres creuses est traitée thermiquement pendant le processus d'étirement.

10. Procédé selon une ou plusieurs des revendications 1 à 9, **caractérisé en ce que** l'espace intérieur qui se forme dans la membrane à fibres creuses pendant le processus d'extrusion est soumis à un deuxième gaz et / ou mélange de gaz en vue de la modification de la couche de paroi intérieure.

11. Procédé selon la revendication 10, **caractérisé en ce que** la composition et / ou la pression du gaz et /ou du mélange de gaz qui charge le polymère, et celle du gaz et / ou du mélange de gaz qui agit à l'intérieur sur la membrane à fibres creuses sont différentes.

12. Procédé selon une ou plusieurs des revendications 5 à 11, **caractérisé en ce que** le processus d'extrusion du polymère est choisi tel qu'en même temps une multitude de polymères et / ou de mélanges de polymères différents peuvent être extrudés pour la formation d'un gradient de porosité déterminable à l'avance le long de la section de la membrane à fibres creuses.

13. Utilisation des membranes à fibres creuses, qui peuvent être produites selon le procédé conforme à une ou plusieurs des revendications 1 à 12, en médecine humaine et vétérinaire, et en génie biologique, chimique et environnemental.

14. Utilisation des membranes à fibres creuses, qui peuvent être produites selon le procédé conforme à une ou plusieurs des revendications 1 à 12, pour la dialyse, la microfiltration ainsi que pour la perméation de vapeurs.
